# EUROPÄISCHE PATENTANMELDUNG

(11) **EP 1 702 673 A2**
(43) Veröffentlichungstag der Anmeldung: **20.09.2006**
(21) Anmeldenummer: 06004605.9
(22) Anmeldetag: 07.03.2006
(51) Int. Cl.: B01F 17/10, D06M 13/224, D06M 13/252

(54) **Anionische Weichmacher auf Sulfosuccinatbasis**

(30) Priorität: 16.03.2005 DE 102005012479
(71) Anmelder: Cognis IP Management GmbH, 40589 Düsseldorf (DE)
(72) Erfinder: Falkowski, Jürgen, 40789 Monheim (DE); Hartschen, Christa, 47800 Krefeld (DE); Wahle, Bernd, 41564 Kaarst (DE)

(57) **Zusammenfassung**

Vorgeschlagen werden Dispersionen anionischer Weichmacher, erhältlich durch
a) Umsetzung von Partialglyceriden mit Maleinsäureanhydrid in einem Temperaturbereich oberhalb 53°C, wobei Maleinsäureanhydrid in stöchiometrischen oder unterstöchiometrischen Mengen eingesetzt wird,
b) Sulfitierung des Reaktionsproduktes von a) durch Umsetzung mit einer wässrigen Lösung von Natriumsulfit, wobei die Menge an Wasser so auszuwählen ist, dass das Endprodukt in Form einer 5 bis 50 Gew. % igen wässrigen Lösung vorliegt,
sowie Pulverfomulierungen erhältlich dadurch, dass die wässrigen Dispersionen getrocknet werden.

## Beschreibung

### Gebiet der Erfindung

Die Erfindung befindet sich auf dem Gebiet der Textiltechnologie und betrifft neue anionische Weichmacher mit hydrophilen Eigenschaften und ein Verfahren zu deren Herstellung.

### Stand der Technik

Der Gesamtverbrauch von Wasch- und Reinigungsmitteln in Europa liegt derzeit bei ungefähr 4 Mio. t pro Jahr, davon entfallen 0,65 bis 0,7 Mio. t auf Deutschland. Allein 10 % dieser Wasch- und Reinigungsmittel kommen aus dem Bereich der Wäscheweichmacher, die üblicherweise Kationtenside vorwiegend aus der Gruppe der quartären Dialkylammoniumester (Esterquats) darstellen. Kationische Weichmacher zeigen jedoch häufig eine unzureichende Hydrophilie auf dem Textil und erweisen sich als ungeeignet für die Ausrüstung von cellulosischen Fasern, wie beispielsweise Baumwollunterwäsche.

Anionische Weichmacher haben bislang in der Textilindustrie nur eine untergeordnete Rolle gespielt. Der Hauptgrund hierfür ist der - im Vergleich zu den üblicherweise eingesetzten kationischen Weichmachern - schlechtere Griff und das etwas schlechtere Aufziehverhalten. Ein Vorteil der anionischen Weichmacher gegenüber den Kationtensiden ist jedoch ihre geringere Vergilbungsneigung, da sie keine stickstofflialtigen Gruppen im Molekül enthalten, die häufig in Verbindung mit Luftsauerstoff zu Vergilbungen auf dem Textil führen.

Eine besondere Herausforderung an Waschmittel und Weichmacher stellen die wachsenden ökologischen Anforderungen. Bereits 1964 wurde im Detergentiengesetz festgelegt, dass mindestens 80% der verwendeten Tenside biologisch abbaubar sein müssen. Ebenso wurde 1975 im Waschmittelgesetz bestimmt, dass Waschmittel keine umweltschädigenden Zusatzstoffe enthalten dürfen. Diese Anforderungen sind Grundlagen für die Neuentwicklung von Wäschebehandlungsmitteln. Auf eine nachhaltige Umweltverträglichkeit sollte aber nicht nur hinsichtlich der eingesetzten Endprodukte, sondern bereits bei der Herstellung der Produkte und der Auswahl der Einsatz- und Zwischenprodukte für diese Herstellung geachtet werden.

Ebenso müssen sich Wäscheweichmacher, da sie größtenteils auf der Textilfaser verbleiben und somit in den direkten Körperkontakt kommen, durch eine sehr gute Hautverträglichkeit auszeichnen

Aufgabe der vorliegenden Erfindung ist es daher, Weichmacher mit hydrophilen Eigenschaften für Textilien zur Verfügung zu stellen, die eine geringe Vergilbungstendenz der Wäsche bewirken, ein gutes Aufziehverhalten insbesondere auf hydrophile Textilfasern aufweisen und in ihrer Herstellung, Hautverträglichkeit und Bioabbaubarkeit den weiter steigenden Umweltanforderungen nachkommen.

### Beschreibung der Erfindung

Gegenstand der Erfindung sind Dispersionen anionischer Weichmacher, erhältlich durch
a) Umsetzung von Partialglyceriden mit Maleinsäureanhydrid in einem Temperaturbereich oberhalb 53°C, wobei Maleinsäureanhydrid in stöchiometrischer oder unterstöchiometrischer Menge eingesetzt wird und
b) Sulfitierung des Reaktionsproduktes von a) durch Umsetzung mit einer wässrigen Lösung von Natriumsulfit, wobei die Menge an Wasser so auszuwählen ist, dass das Endprodukt in Form einer 5 bis 50 Gew. % igen wässrigen Lösung vorliegt.

Anionische Weichmachungsmittel zeigen gute Eigenschaften bezüglich Nichtvergilbung und Hydrophilie, haben aber normalerweise unzureichende Effekte in Punkto Weichgriff. Überraschenderweise wurde nun gefunden, dass Gemische von langkettigen Glyzerin-Fettsäureestem (Partialglyceride), verestert mit Maleinsäureanhydrid und nachfolgender Umsetzung mit Natriumsulfit zu Sulfosuccinaten sehr gute Weichgriff-Eigenschaften auf cellulosischen Fasern aufweisen, verbunden mit guter Hydrophilie und praktisch keiner Vergilbungsneigung.

Ein weiterer Gegenstand der Erfindung ist das Verfahren zur Herstellung anionischer Weichmacherformulierungen, bei dem man
a) Partialglyceride mit Maleinsäureanhydrid in einem Temperaturbereich oberhalb 53°C umsetzt, wobei Maleinsäureanhydrid in stöchiometrischer oder unterstöchiometrischer Menge eingesetzt wird,
b) eine Sulfitierung des Reaktionsproduktes von a) durch Umsetzung mit einer wässrigen Lösung von Natriumsulfit durchführt, wobei die Menge an Wasser so auszuwählen ist, dass das Endprodukt in Form einer 5 bis 50 Gew. % igen wässrigen Lösung vorliegt, und
c) gegebenenfalls die wässrige Dispersion zu einem Pulver trocknet.

Die nach diesem Verfahren hergestellten Formulierungen lassen sich hervorragend zur Herstellung von Textilien mit hydrophilen Eigenschaften und gleichzeitig gutem Weichgriff einsetzen.

Die für die Herstellung eingesetzten Partialglyceride können nach technisch bekannten und kostengünstigen Verfahren direkt durch Umesterung aus natürlich vorkommenden pflanzlichen oder tierischen Fetten hergestellt werden. Darüber hinaus kann man diese Partialglyceride auch über dem Wege der Direktveresterung aus Glycerin oder anderen Polyolen und den gewünschten Fettsäuren herstellen.
Die für die Umesterung verwendeten Fette und Öle enthalten vorzugsweise längerkettige und gesättigte Fettsäuren mit einer Anzahl an Kohlenstoffatomen von C 14 - C 24, wobei der Bereich von C 16 - C 22 besonders bevorzugt ist.
Das gleiche gilt auch für die bei der Direktveresterung eingesetzten Fettsäuren.
Die damit hergestellten Partialglyceride haben vorzugsweise einen Gehalt an Monoglyceriden von 45 Gew % - 60 Gew%, besonders bevorzugt ist der Bereich von 50 Gew% - 55 Gew%. Der Gehalt an Diglyceriden liegt bei 20 Gew.% - 35 Gew.%. Der Rest können Triglyceride und kleine Mengen an freiem Glycerin sein, wobei üblicherweise der Glyceringehalt kleiner als 2 Gew.% ist.
Prinzipiell möglich ist auch ein Einsatz von höherkonzentrierten Monoglyceriden, die einen Monogehalt > 90 % aufweisen. Die Herstellung dieser höherkonzentrierten Monoglyceride erfordert aber die Anwendung einer zusätzlichen Destillationsstufe, was die Herstellung deutlich verteuert und für Bereich der Weichmacher wirtschaftlich uninteressant macht.
Darüberhinaus ist ein Restanteil an Tri- bzw. Diglyceriden von längerkettigen Fettsäuren, das heisst mit Kettenlängen von 16 - 22 Kohlenstoffatomen, für den Weichgriff des Produktes durchaus vorteilhaft sein kann.
Da die eingesetzten Partialglyceride als Mischung aus Tri-, Di-, und Monoglyceriden vorliegen, d.h. auch zweiwertige Alkohole enthalten, kommt es bei der Umsetzung mit dem difunktionellen Maleinsäureanhydrid zur Bildung von monomeren und in geringen Umfang auch oligomeren Vorstufen, die eine unterschiedliche Zahl an Fettsäuremolekülen enthalten. Die anschliessende Umsetzung mit Natriumsulfit zu den entsprechenden Sulfosuccinaten ergibt dadurch Produkte, die neben den bekannten hydrophilen Eigenschaften auch einen guten Weichgriff auf dem Textil liefern.

Zu den wesentlichen Vorteilen der erfindungsgemäss beschriebenen Produkte gehören nicht nur die gute Eignung zur hydrophilen und vergilbungsarmen Ausrüstung von Textilien bei gleichzeitig gutem Weichgriff, sondern auch der positive ökologische Hintergrund. Die Produkte lassen sich aus preiswerten Rohstoffen herstellen und bestehen zu ungefähr 70 % aus Derivaten nachwachsender Rohstoffen, wie tierischen und pflanzlichen Fetten oder Ölen.
Sie enthalten keine Aminverbindungen, die in der Vergangenheit häufig bezüglich ihrer ökologischen und dermatologischen Eigenschaften kritisiert wurden.
Außerdem zeichnen sie sich durch eine sehr gute Hautverträglichkeit aus, denn Sulfosuccinate werden in der Kosmetikindustrie als besonders milde und hautverträgliche Substanzen angesehen. Daher ist auch die Verwendung auf körpernah getragenen oder verwendeten Textilien, wie Handtücher oder Unterwäsche, unbedenklich.

Die entstehenden Endprodukte können direkt als 10 bis 50 % ige wässrige Lösung eingesetzt werden oder in Ihrer Viskosität durch weitere Zusätze variiert werden.
Um eine bessere Lagerstabilität zu erreichen, ist es auch möglich die Lösungen einer Trocknung - vorzugsweise Sprühtrocknung - zu unterziehen, wobei andere übliche Trocknungsverfahren nicht ausgeschlossen sind. Das Pulver kann dann vor der Anwendung erneut mit Wasser verdünnt werden oder sogar in pulveriger Form direkt der Waschflotte zugesetzt werden.
Die anwendungstechnischen Eigenschaften der wässrigen Endprodukte könnten auch durch Zusätze von nichtionischen Weichmachern, wie zum Beispiel Fettsäureethoxylaten, noch wunschgemäss verändert werden.

### Herstellung der anionischen Weichmacherdispersion

Die Herstellung der Partialglyceride kann mit den technisch üblichen Parametern bzgl. Druck, Temperatur und Katalysatoreinsatz erfolgen.
Beispielsweise kann gehärteter Rindertalg mit Glycerin und Natriummethylat als Katalysator im Temperaturbereich von 80°C bis 140 °C innerhalb von 1-2 h zu dem entsprechenden Partialglycerid umgeestert werden.
Andere bekannte Umesterungskatalysatoren wie Kalium- oder Natriumhydroxid können ebenfalls verwendet, wobei zur Verkürzung der Reaktionszeit auch Temperaturen bis 280 °C möglich sind.
Die Herstellung der Partialglyceride über Veresterung kann ebenfalls mit den technisch bekannten Parametern erfolgen. Beispielsweise kann Glycerin mit Stearinsäure und p-Toluolsulfonsäure als Katalysator im Temperaturbereich von 120 - 180 °C verestert werden, wobei das entstehende Reaktionswasser im Vakuum abdestilliert wird.

Andere bekannte Veresterungskatalysatoren wie Schwefelsäure oder Tetrabutyltitanat können ebenfalls verwendet werden, wobei zur Verkürzung der Reaktionszeit auch Temperaturen bis 260 °C gefahren werden können.

Die Umsetzung der Partialglyceride mit Maleinsäureanhydrid erfolgt in einem Temperaturbereich, der oberhalb des Schmelzpunktes des Maleinsäureanhydrids von 53 °C liegt. Vorzugsweise wird der Schritt bei Temperaturen oberhalb von 60°C besonders bevorzugt in einem Temperaturbereich von 70 °C - 90 °C durchgeführt. Höhere Temperatur werden in dem wässrigen Reaktionssystem im allgemeinen nicht angewendet, da bei Annäherung an den Siedepunkt des Wassers das Reaktionsgemisch zur Schaumbildung neigt.

Das Verhältnis der eingesetzten Reaktanden sollte so gewählt werden, dass die Menge an eingesetztem Maleinsäureanhydrid möglichst vollständig abreagiert, das heisst die eingesetzte Menge an Maleinsäureanhydrid wird so berechnet, dass theoretisch bei den Monoglyceriden nur eine OH-Gruppe der beiden freien OH-Gruppen und bei den Diglyceriden die nicht veresterte OH-Gruppe abreagiert. Bevorzugt wird daher ein Verfahren bei dem diese theoretische Menge Maleinsäureanhydrid zu den jeweiligen Halbestern als Zwischenstufe vor der Sulfiterung abreagiert. Man kann dieses Verfahren auch als unterstöchiometrische Veresterung bezeichnen, da nicht alle theoretisch möglichen OH-Gruppen mit dem Maleinsäureanhydrid verestert werden.
Es ist auch möglich eine kleinere als die nach dem bevorzugten Verfahren berechnete Menge an Maleinsäureanhydrid zu verwenden. Bei derartigen Einsatzmengen reagieren die Partialglyceride also nicht vollständig ab, sondern es verbleibt im Endprodukt auch ein kleiner Anteil an Di- und Monoglyceriden übrig, die nicht zu dem jeweiligen Halbester der Maleinsäure reagiert haben und dementsprechend bei der anschliessenden Sulfitierung kein Sulfosuccinat bilden.
Die Produkteigenschaften der fertigen Reaktionsmischung hinsichtlich Hydrophilie und Vergilbungsneigung werden durch diese Restmengen an Partialglyceriden nicht beeinträchtigt. Der Weichgriff bzw. die Emulgierbarkeit und Verdünnbarkeit der fertigen Produktdispersion kann durch einen derartiges Verfahren je nach Anwendungsfall sogar entsprechend modifiziert werden.

Der letzte Prozessschritt, die sogenannte Sulfitierung, erfolgt durch Umsetzung des Reaktionsproduktes aus den Partialglyceriden und Maleinsäureanhydrid mit einer wässrigen Lösung von Natriumsulfit, wobei es sich hier als vorteilhaft erwiesen die Menge an Wasser so auszuwählen, dass das Endprodukt als 10 bis 50%ige, vorzugsweise 20 bis 40 %ige und besonders bevorzugt als 27 bis 33 %ige Lösung vorliegt.

Höhere Verdünnungen sind prinzipiell natürlich möglich, sind aber aufgrund der schlechter werdenden Raum-Zeit-Ausbeute im Reaktor bzw. der höheren Transport- und Lagerkosten unwirtschaftlich. Niedrigere Wassergehalte führen zu deutlich höherviskosen Produkten, die ab einem Wassergehalt von ca. 50% nicht mehr rühr- bzw. pumpbar sind.

Restgehalte an nicht abreagiertem Natriumsulfit können durch Zugabe von Wasserstoffperoxid zum entsprechenden Natriumsulfat umgesetzt werden.
Das als wässrige Dispersion vorliegende Endprodukt kann zur besseren Lagerung bzw. zum Transport nachfolgend zu einer Pulverformulierung getrocknet werden, wobei die Sprühtrocknung bevorzugt wird.

### Beispiele

660 g eines Gemisches aus Partialglyceriden (Cutina GMS der Fa. Cognis) wird mit 138 g (1,41 mol) Maleinsäureanhydrid in einem elektrisch beheizten Laborrührkessel mit Rückflusskühler innerhalb von 3 h bei 85 °C zum entsprechenden Maleinsäureester umgesetzt. Nach 3 h wurde eine Säurezahl von 102,5 gemessen, was einem Umsatz an Maleinsäureanhydrid von 96 % entspricht.
Dieses Reaktionsprodukt wurde in eine vorgelegte Lösung aus 2317g VE-Wasser, 176 g Natriumsulfit (1,39 mol) und 14 g Natronlauge, 50 %ig eingerührt und 2 h bei 75 °C gerührt. Anschliessend wurde der Restgehalt an Natriumsulfit durch Zugabe von 8 g Wasserstoffperoxid zerstört und der pH-Wert durch Zugabe von verdünnter Natronlauge auf pH = 6,5 - 7 eingestellt.
Das Endprodukt hatte eine Viskosität von 180 mPas und einen Epton-Wert von 0,24 mval/g.

Mit diesem Produkt wurden mehrere Baumwoll-Frottee - Tücher durch Zwangsapplikation auf einem Foulard ausgerüstet. Hierzu wurde eine Flotte mit 20g/l des 30 %igen Reaktionsproduktes angesetzt und bei einer Laufgeschwindigkeit von 3,0 m/min ein Abquetschdruck von 4 bar am Foulard eingestellt.
Die ausgerüsteten Baumwoll-Frottee-Tücher wurden im Spannrahmen bei-verschiedenen Bedingungen getrocknet.
Nachfolgende Weissgrade nach Berger wurden gemessen:

**Tab. 1 - Weissgrade nach Berger**

| Trocknungsbedingungen | GMS-Sulfosuccinat | Standardweichmacher, kationisch (Belsoft® 44, Fa. Cognis) |
|---|---|---|
| 130 °C / 2 min | 149,01 | 143,3 |
| 130°C/2min | 141,98 | 136,1 |
| 150 °C/ 3 min | | |
| 130°C/2min | 136,84 | 130,8 |
| 180 °C /1 min | | |

Man sieht eine deutliche Verbesserung im Weissgrad bei den mit GMS-Sulfosuccinat ausgerüsteten Produkten.

Der Weichgriff wurde von verschiedenen Testpersonen als gleichwertig gegenüber dem Griff der mit herkömmlichen, kationischen Weichmachern ausgerüsteten Baumwoll-Frottee-Tüchem beurteilt.

Um die Hydrophilie zu beurteilen wurde die Steighöhe einer Wassersäule gemessen.
Bei den mit Belfasin® 44 ausgerüsteten Produkten wurde eine Steighöhe von 0 mm gemessen, das heißt diese Produkte ergeben eine stark hydrophobe Ausrüstung.
Bei den mit GMS-Sulfosuccinaten ausgerüsteten Tüchern wurde eine Steighöhe von 20 mm gemessen, somit ergab sich eine deutlich hydrophile Ausrüstung.

## Patentansprüche

1. Dispersionen anionischer Weichmacher, erhältlich durch
a) Umsetzung von Partialglyceriden mit Maleinsäureanhydrid in einem Temperaturbereich oberhalb 53°C, wobei Maleinsäureanhydrid in stöchiometrischen oder unterstöchiometrischen Mengen eingesetzt wird,
b) Sulfitierung des Reaktionsproduktes von a) durch Umsetzung mit einer wässrigen Lösung von Natriumsulfit, wobei die Menge an Wasser so auszuwählen ist, dass das Endprodukt in Form einer 5 bis 50 Gew. % igen wässrigen Lösung vorliegt.

2. Pulverformulierungen anionischer Weichmacher, erhältlich durch Trocknung des Reaktionsproduktes nach Schritt b) gemäß Anspruch 1.

3. Zusammensetzungen anionischer Weichmacher gemäß der Ansprüche 1 und/oder 2, **dadurch gekennzeichnet, dass** Schritt a) bei Temperaturen oberhalb von 70°C durchgeführt wird.

4. Zusammensetzungen anionischer Weichmacher gemäß der Ansprüche 1 bis 3, **dadurch gekennzeichnet, dass** die Menge an Wasser im Schritt b) so ausgewählt wird, dass das Endprodukt in Form einer 20 bis 40 Gew. % igen wässrigen Lösung vorliegt.

5. Verfahren zur Herstellung anionischer Weichmacherformulierungen, bei dem man
a) Partialglyceride mit Maleinsäureanhydrid in einem Temperaturbereich oberhalb 53°C umsetzt, wobei Maleinsäureanhydrid in stöchiometrischen oder unterstöchiometrischen Mengen eingesetzt wird.
b) eine Sulfitierung des Reaktionsproduktes von a) durch Umsetzung mit einer wässrigen Lösung von Natriumsulfit durchführt, wobei die Menge an Wasser so auszuwählen ist, dass das Endprodukt in Form einer 5 bis 50 Gew. % igen wässrigen Lösung vorliegt, und
c) gegebenenfalls die wässrige Dispersion zu einem Pulver trocknet.

6. Verwendung von Formulierungen anionischer Weichmacher gemäß der Ansprüche 1 bis 4 zur Hydrophilierung von Textilien.
